# FASCICULE DE BREVET EUROPEEN

(11) **EP 4 295 070 B1**
(45) Date de publication et mention de la délivrance du brevet: **22.01.2025**
(21) Numéro de dépôt: 22704368.4
(22) Date de dépôt: 07.02.2022
(51) Int. Cl.: F16L 21/04, F16L 21/08

(54) **ENSEMBLE D'ETANCHEITE ET DE VERROUILLAGE POUR JONCTION TUBULAIRE FLEXIBLE**
DICHTUNGS- UND VERRIEGELUNGSANORDNUNG FÜR EINE FLEXIBLE ROHRVERBINDUNG
SEALING AND LOCKING ASSEMBLY FOR A FLEXIBLE TUBULAR JUNCTION

(30) Priorité: 17.02.2021 FR 2101538
(43) Date de publication de la demande: 27.12.2023
(73) Titulaire: ELECTROSTEEL EUROPE SA, 13200 Arles (FR)
(72) Inventeur: HAHANG, Cyrille, 13100 Aix en Provence (FR); NERI, Philippe, 63116 Beauregard-l'Évêque (FR); DIGARD, Jérémy, 34160 Sussargues (FR)
(74) Mandataire: Matkowska, Franck
(86) Numéro de dépôt international: PCT/EP2022/052861
(87) Numéro de publication internationale: WO 2022/175127

(56) Documents cités:
- EP-A1- 3 460 305
- US-A- 4 867 488
- US-A1- 2016 290 538

## Description

### Domaine technique

La présente invention concerne le domaine de la réalisation d'une jonction tubulaire flexible et verrouillée, entre deux éléments de canalisation, dont l'un comporte un bout uni et l'autre un bout à emboîture. Dans ce domaine, elle concerne principalement un ensemble de verrouillage prêt-à-monter, qui permet le verrouillage axial d'une jonction tubulaire flexible pourvue d'une contrebride d'étanchéité permettant de comprimer une garniture de joint positionnée entre le bout uni et l'emboîture du bout à emboîture. L'invention trouve plus particulièrement son application pour raccorder des canalisations, notamment en fonte ductile, telles que celles utilisées par exemple pour le transport d'eau potable, pour l'assainissement ou pour l'irrigation.

### Art antérieur

Une jonction tubulaire mécanique flexible entre deux éléments de canalisation est décrite par exemple dans la demande de brevet français FR 1 157 516 et comporte de manière usuelle :
- un bout à emboîture à une extrémité de l'un des deux éléments de canalisation,
- un bout uni à l'extrémité de l'autre élément de canalisation, ledit bout uni étant apte à être inséré coaxialement dans l'emboîture dudit bout à emboîture,
- une garniture de joint constituée d'une bague de joint d'étanchéité, en matière élastique, et notamment en élastomère ou caoutchouc,
- une contrebride d'étanchéité.

La bague de joint d'étanchéité est adaptée pour être montée coaxialement entre la face interne de l'emboîture dudit bout à emboîture et la face externe du bout uni inséré coaxialement dans l'emboîture dudit bout à emboîture. La contrebride d'étanchéité permet de comprimer au moins axialement la bague de joint d'étanchéité dans l'emboîture du bout à emboîture, afin d'assurer une étanchéité entre le bout uni et le bout à emboîture.

Un avantage de ce type de jonction tubulaire réside dans une certaine capacité de flexion, autorisant une déviation angulaire légère, typiquement pouvant aller par exemple jusque 5°, du bout uni par rapport au bout à emboîture à la fois pendant ou après la pose et/ou une légère excentration, sans perte d'étanchéité.

En revanche un inconvénient de ce type de jonction tubulaire réside dans les risques importants de déboîtement accidentel du bout uni par rapport au bout à emboîture, en particulier sous les effets de la pression du fluide, et par exemple de l'eau, circulant à travers la jonction tubulaire ou lors de la manipulation ou de la pose dans le sol de la jonction tubulaire.

Pour réduire ces risques de déboîtement, une solution peut consister à réaliser sur site une soudure à l'interface entre le bout uni et l'emboîture du bout à emboîture. Néanmoins, la réalisation de cette soudure est extrêmement contraignante et difficile, requiert un équipement spécial et des consommables pour la soudure, et nécessite de l'expertise.

Pour réduire ces risques de déboîtement, il est également connu de perfectionner la jonction tubulaire flexible susvisée en y ajoutant des moyens de verrouillage axial, de manière à obtenir une jonction tubulaire flexible verrouillée.

Un premier type de solution de verrouillage consiste à ajouter des inserts de verrouillage dans la garniture de joint, ces inserts pouvant être intégrés à la bague de joint ou être séparés de la bague de joint. Ce type particulier de jonction tubulaire flexible et verrouillée au moyen d'un ou plusieurs inserts de verrouillage est décrit par exemple dans la demande de brevet français FR 2 984 985, dans la demande de brevet internationale WO 03/027560 ou dans la demande de brevet français FR 3 029 260. Dans cette solution de verrouillage, sous l'effet de la compression de la garniture d'étanchéité exercée par la contrebride d'étanchéité et de la pression du liquide circulant à travers la jonction, les inserts de verrouillage s'accrochent dans la paroi du bout uni, ce qui permet simultanément au serrage de la contrebride d'étanchéité de verrouiller axialement, dans une certaine mesure, le bout uni par rapport au bout à emboîture.

Un inconvénient toutefois de ces inserts de verrouillage réside dans le réglage délicat de la compression de la bague de joint d'étanchéité entre le bout uni et le bout à emboîture. En effet, pour obtenir une étanchéité par compression de la bague de joint d'étanchéité et un verrouillage axial efficace du bout uni et du bout à emboîture, il faut mettre en oeuvre une force de serrage suffisante tout en maintenant correctement en place le joint dans l'emboîture, afin de permettre l'entrée en service des inserts de verrouillage lors de la mise en pression de la jonction. Mais à l'inverse, en fonction notamment de la dureté de la bague de joint d'étanchéité, une compression trop importante de cette bague de joint d'étanchéité peut aboutir à une détérioration de la bague de joint d'étanchéité (notamment apparition de fissures, déchirures ou ruptures dans la bague de joint d'étanchéité), ce qui est préjudiciable à l'étanchéité. Dans ce type de jonction tubulaire, il y a un donc un risque, lors de la mise en oeuvre du serrage, de comprimer la bague de joint d'étanchéité trop fortement ou bien en la décentrant à l'intérieur de l'emboîture et d'occasionner de manière préjudiciable un défaut d'étanchéité et des fuites au niveau de cette bague de joint d'étanchéité.

On a par ailleurs proposé un deuxième type de solution de verrouillage qui permet d'éviter l'inconvénient susvisé des inserts de verrouillage et qui a été décrite notamment dans le brevet américain US 5,544,922.

Dans cette solution, le verrouillage axial est obtenu au moyen d'une contrebride d'étanchéité, qui a été perfectionnée en y intégrant des éléments de verrouillage répartis sur toute la circonférence de la contrebride d'étanchéité. Chaque élément de verrouillage est adapté pour être serré individuellement contre le bout uni afin de verrouiller axialement la jonction tubulaire, une fois que la contrebride d'étanchéité a elle-même été serrée pour comprimer la bague de joint d'étanchéité.

Dans cette solution, la fonction d'étanchéité par compression de la bague de joint et la fonction de verrouillage sont ainsi avantageusement indépendantes l'une de l'autre. En revanche, cette solution de réalisation d'une jonction tubulaire flexible verrouillée présente l'inconvénient majeur d'être longue et fastidieuse à mettre en oeuvre. Il faut en effet positionner chaque élément de verrouillage dans la contrebride, puis serrer individuellement chaque élément de verrouillage l'un après l'autre, en vérifiant pour chaque élément de verrouillage que le serrage est correct.

Un autre inconvénient de cette solution réside dans le fait qu'elle nécessite la mise en oeuvre d'une contrebride d'étanchéité très spécifique, et ne peut pas être utilisée pour améliorer le verrouillage axial d'une jonction tubulaire flexible existante en conservant la contrebride d'étanchéité de cette jonction.

On a par ailleurs déjà proposé, dans la demande de brevet US 2016/290538, un ensemble de verrouillage qui est destiné à être adapté sur une contrebride d'étanchéité pour jonction tubulaire du type comportant un bout uni, un bout à emboîture, et au moins une garniture de joint. Cet ensemble de verrouillage comporte deux plaques de pression séparées, chacune en forme d'arc de cercle, et un accessoire de retenue sous la forme d'un collier de retenue flexible, pouvant être resserré au moyen de boulons de serrage. Chaque plaque de pression comporte des trous traversants utilisés pour son montage sur la contrebride d'étanchéité et sur le bout à emboîture au moyen de boulons de fixation. Chaque plaque de pression comporte des parties évidées en forme d'arc de cercle, qui permettent de loger des parties de bride, qui sont en saillie à la périphérie de la face externe du collier de retenue.

La mise en oeuvre de ces deux plaques de pression ne permet pas d'obtenir un assemblage robuste et complique en outre les opérations de montage.

Le brevet américain US 4,867,488 divulgue un ensemble d'étanchéité et de verrouillage.

### Objectifs de l'invention

L'invention a pour objet un ensemble de verrouillage prêt-à-monter, qui est adapté pour être monté facilement et de manière robuste sur une contrebride d'étanchéité d'une jonction tubulaire flexible du type comportant un bout uni, un bout à emboîture, et au moins une garniture de joint.

Outre la facilité et la robustesse de montage, l'invention permet également de pallier l'inconvénient susvisé du réglage délicat de la compression de la garniture de joint dans les jonctions tubulaires susvisées de l'art antérieur avec inserts de verrouillage, tout en étant simple et rapide à mettre en oeuvre à la différence notamment de la solution du brevet américain US 5, 544,922 susvisé.

De manière préférentielle, cette nouvelle solution technique permet également d'obtenir un verrouillage axial fiable qui permet de préférence d'éviter la réalisation d'une soudure additionnelle sur site.

De préférence, la solution technique de l'invention peut également le cas échéant être facilement utilisée pour améliorer le verrouillage axial d'une jonction tubulaire flexible existante, en conservant la contrebride d'étanchéité de cette jonction.

### Résumé de l'invention

L'invention a pour premier objet un ensemble d'étanchéité et de verrouillage selon la revendication 1.

Plus particulièrement, mais de manière facultative selon l'invention, l'ensemble d'étanchéité et de verrouillage de l'invention peut comporter les caractéristiques techniques définies dans les revendications 2 à 10.

L'invention a pour deuxième objet un ensemble pour la réalisation d'une jonction tubulaire flexible et verrouillée, ledit ensemble comportant un premier élément de canalisation comportant un bout à emboîture à au moins une extrémité, un deuxième élément de canalisation comportant un bout uni à au moins une extrémité, au moins une garniture de joint adaptée pour être montée entre l'emboîture du bout à emboîture et le bout uni inséré coaxialement dans ladite emboîture du bout à emboîture, et ledit ensemble comportant un ensemble d'étanchéité et de verrouillage susvisé.

Plus particulièrement, mais de manière facultative selon l'invention, l'ensemble d'étanchéité et de verrouillage de l'invention peut comporter les caractéristiques techniques définies dans les revendications 12 à 14.

L'invention a pour troisième objet une utilisation de l'ensemble susvisé pour la réalisation d'une jonction tubulaire flexible et verrouillée.

L'invention a pour quatrième objet un procédé de réalisation d'une jonction tubulaire flexible et verrouillée au moyen de l'ensemble susvisé, et comportant les étapes successives suivantes :
- on insère l'accessoire de retenue à l'intérieur de la contrebride de verrouillage ;
- on monte l'ensemble contrebride de verrouillage/accessoire de retenue sur le bout uni en le faisant coulisser axialement sur le bout uni ;
- on monte la contrebride d'étanchéité sur le bout uni en la faisant coulisser axialement sur le bout uni ;
- on insère le bout uni coaxialement dans l'emboîture du bout à emboîture, la garniture de joint ayant été préalablement positionnée dans l'emboîture du bout à emboîture ;
- on assemble la contrebride de verrouillage avec la contrebride d'étanchéité et avec le bout à emboîture, de préférence avec un serrage axial de la contrebride de verrouillage avec la contrebride d'étanchéité et avec le bout à emboîture, de manière à comprimer la garniture de joint au moyen de la contrebride d'étanchéité, de préférence sur toute la circonférence du bout uni ;
- on serre l'accessoire de retenue sur le bout uni, avec une force de serrage suffisante pour immobiliser l'accessoire de retenue sur le bout uni.

### Brève description des figures

Les caractéristiques et avantages de l'invention apparaîtront plus clairement à la lecture de la description détaillée ci-après d'une variante préférée de réalisation d'une jonction tubulaire flexible et verrouillée conforme à l'invention, laquelle variante préférée de réalisation est décrite à titre d'exemple non limitatif et non exhaustif de l'invention, et en référence aux dessins annexés sur lesquels :
- la figure 1 est une vue isométrique éclatée d'un ensemble conforme à l'invention et permettant la réalisation d'une jonction tubulaire flexible et verrouillée entre deux éléments de canalisation ;
- la figure 2 est une vue en coupe longitudinale d'une jonction tubulaire flexible et verrouillée réalisée au moyen de l'ensemble de la figure 1 ;
- la figure 3 est une vue isométrique d'un bout uni sur lequel est enfilé un collier de retenue, qui est en deux parties et qui peut être resserré de manière à être immobilisé sur le bout uni ;
- la figure 4 est une vue en coupe longitudinale du bout uni et du collier de retenue de la figure 3.
- La figure 5 est une vue isométrique d'une variante préférée de réalisation de la contrebride de verrouillage.

### Description détaillée

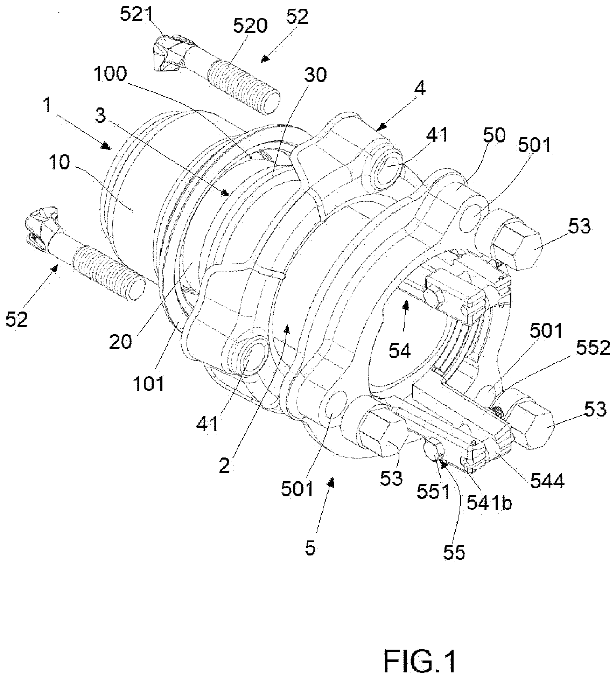

On a représenté sur la figure 1 une variante préférée de réalisation d'un ensemble permettant la réalisation d'une jonction tubulaire flexible et verrouillée entre deux éléments de canalisation 1 et 2. L'élément de canalisation 1 comporte, à l'une au moins de ses extrémités, un bout à emboîture 10 comportant une bride de serrage 101 ; l'élément de canalisation 2 comporte, à l'une au moins de ses extrémités, un bout uni 20 qui est apte à être inséré coaxialement dans l'emboîture 100 du bout à emboîture 10.

Plus particulièrement, la bride de serrage 101 peut être est formée par une collerette cylindrique qui s'étend de manière continue sur toute la circonférence du bout à emboîture 10. Dans une autre variante, illustrée par exemple sur la figure 1 de la demande de brevet français FR 2 984 985, la bride de serrage 101 peut être constituée de plusieurs éléments en saillie à fonction de bride, qui sont répartis sur la circonférence externe du bout à emboîture 10.

L'élément de canalisation 1 ou 2 peut d'une manière générale être un tuyau ou un raccord de canalisation droit ou coudé et/ou à changement de section.

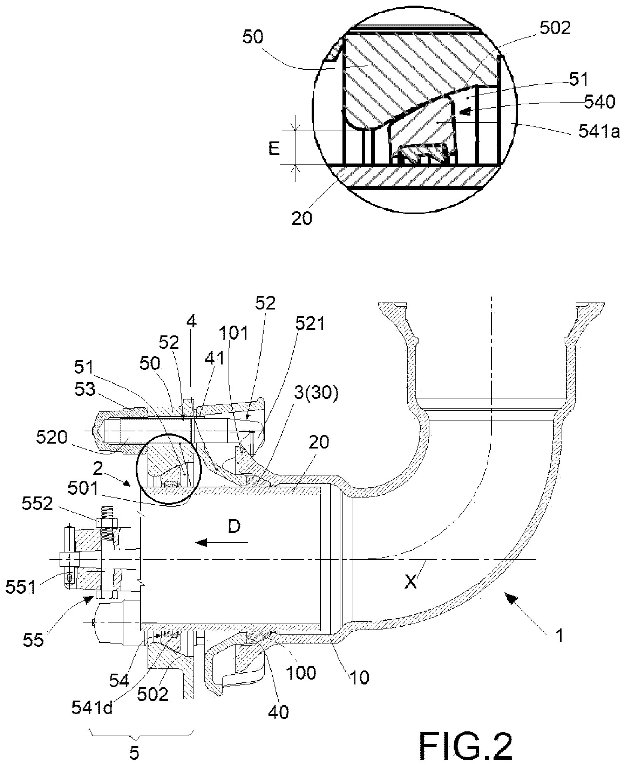

La figure 2 représente une jonction tubulaire flexible verrouillée, d'axe central longitudinal X, réalisée au moyen de l'ensemble de la figure 1 et dans laquelle, de manière non limitative et non exhaustive de l'invention, l'élément de canalisation 1 est par exemple constitué par un raccord, en particulier un raccord formant un coude à 90° et l'élément de canalisation 2 est un tuyau.

La matière constitutive des éléments de canalisation 1 et 2 est sans importance pour l'invention. Néanmoins, les éléments de canalisation 1, 2 sont de préférence réalisés en fonte ductile, en particulier lorsqu'ils sont destinés à être enterrés dans le sol et/ou à être utilisés par pour le transport d'eau potable, pour l'assainissement ou pour l'irrigation.

En référence à la figure 1, outre les deux éléments de canalisation 1 et 2, l'ensemble de l'invention comporte une garniture de joint 3, une contrebride d'étanchéité 4 cylindrique permettant la compression de la garniture de joint 3 et un ensemble de verrouillage prêt-à-monter 5.

Dans l'exemple particulier illustré sur les figures 1 et 2, la garniture de joint 3 est constituée par une bague de joint 30, en matière élastique, et notamment en élastomère ou caoutchouc. De manière connue en soi, cette bague de joint 30 est adaptée pour être positionnée coaxialement dans l'emboîture 100 du bout à emboîture 10, de manière à réaliser une étanchéité entre la face interne de cette emboîture 100 et la face externe du bout uni 20 inséré coaxialement dans l'emboîture 100, sur toute la circonférence du bout uni 20.

Dans d'autres réalisations couvertes par l'invention, et de manière non exhaustive, la garniture de joint 3 peut comporter plusieurs bagues de joint et/ou peut comporter des inserts de verrouillage intégrés à la bague de joint 30 ou séparés de la bague de joint 30, tel que décrit par exemple dans la demande de brevet français FR 2 984 985. Ces inserts de verrouillage sont par exemple en métal, et notamment en acier inoxydable.

La garniture de joint 3 peut également être du même type que celle décrite dans la demande de brevet français FR 3 029 260 et comporter une bague de joint avant compressible adaptée pour être comprimée par la contrebride d'étanchéité 4 et prolongée par une bague de joint arrière qui n'est pas comprimée par la contrebride d'étanchéité 4. Par ailleurs la garniture de joint peut être faite d'un seul et même matériau élastique, et est par exemple en EPDM ou en caoutchouc ou peut être composée de plusieurs matériaux élastiques pouvant être différents, et présenter notamment des duretés Shore différentes.

En référence aux figures 1 et 2, la contrebride d'étanchéité 4 cylindrique est adaptée pour être montée en étant enfilée sur le bout uni 20 et pour être assemblée rigidement avec le bout à emboîture 10, en étant serrée axialement contre la bride de serrage 101 du bout à emboîture 10, de manière à comprimer, de préférence au moins axialement, la bague de joint 30 positionnée entre le bout uni 20 et l'emboîture 100 du bout à emboîture 10.

Plus particulièrement, cette contrebride d'étanchéité 4 comporte une extrémité cylindrique dont la face avant annulaire 40 (figure 2) est positionnée en vis-à-vis de la garniture de joint 3, et plus particulièrement de la bague de joint 30 lorsque la contrebride 4 est montée sur le bout uni 20, et qui est amenée au contact et comprime la garniture de joint 3, et plus particulièrement la bague de joint 30, de préférence sur toute sa circonférence, lorsque la contrebride 4 est rapprochée axialement de la bride de serrage 101.

La contrebride d'étanchéité 4 comporte également des ouvertures d'assemblage 41 axiales et traversantes, par exemple au nombre de trois, qui sont régulièrement réparties sur sa circonférence, et qui permettent le montage de boulons de serrage à travers la contrebride d'étanchéité 4.

Dans la variante particulière illustrée, la contrebride d'étanchéité 4 est faite d'une seule pièce. Dans d'autres variantes, elle peut être constituée par un assemblage monolithique rigide de plusieurs pièces.

L'ensemble de verrouillage prêt-à-monter 5 comporte :
- une contrebride de verrouillage 50 cylindrique, qui est séparée de la contrebride d'étanchéité 4, et qui est adaptée pour être montée en étant enfilée sur le bout uni 20 et pour délimiter une chambre de retenue annulaire 51 (figure 2) avec la face externe du bout uni 20, et
- des moyens d'assemblage 52, 53, qui d'une manière générale permettent d'assembler rigidement la contrebride de verrouillage 50 avec la contrebride d'étanchéité 4 et le bout à emboîture 10, de préférence de manière démontable et/ou de préférence avec un serrage axial réglable de l'ensemble contrebride de verrouillage 50/ contrebride d'étanchéité 4/bout à emboîture 10.

Plus particulièrement, la contrebride de verrouillage 50 comporte des ouvertures d'assemblage 501 axiales et traversantes, par exemple au nombre de trois, qui sont régulièrement réparties sur sa circonférence, et qui permettent le montage de boulons de serrage à travers la contrebride de verrouillage 50.

Lorsque la contrebride d'étanchéité 4 est montée sur le bout uni 20, on l'oriente par rapport à la contrebride de verrouillage 50, de telle sorte que chaque ouverture d'assemblage 41 de la contrebride d'étanchéité 4 est alignée axialement (axe X de la figure 2) avec une ouverture d'assemblage 501 de la bride de verrouillage 50.

Les moyens d'assemblage 52, 53 comportent, pour chaque paire d'ouvertures d'assemblage 41, 501 alignées, un boulon de serrage constitué d'une vis 52 à tige filetée 520 associée à un écrou 53. La tige filetée 520 de la vis 52 peut être est passée à travers les deux ouvertures d'assemblage 41, 501 en vis avis l'une de l'autre, et la tête 521 de la vis 52 peut être bloquée axialement contre la bride de serrage 101 du bout à emboîture dans la direction axiale D de déboîtement du bout uni 20 (figure 2).

De préférence, tel qu'illustré sur les figures 1 et 2, la tête 521 de chaque vis 52 forme un crochet adapté pour s'accrocher sur le bout à emboîture 10, sans qu'il soit nécessaire de faire passer la vis 52 à travers la paroi du bout à emboîture 10, ce qui permet avantageusement d'éviter de percer la paroi du bout à emboîture 10.

Les boulons de serrage 52, 53 permettent avantageusement, en une seule opération, d'assembler rigidement ensemble la contrebride de verrouillage 50, la contrebride d'étanchéité 4 et le bout à emboîture 10, avec un réglage du serrage axial de l'ensemble contrebride de verrouillage 50/ contrebride d'étanchéité 4/bout à emboîture 10.

Dans une autre variante de réalisation, les moyens d'assemblage 52, 53 peuvent comporter des premiers moyens d'assemblage, par exemple du type boulon de serrage, adaptés pour fixer la contrebride de verrouillage 50 à la contrebride d'étanchéité 4 et des deuxièmes moyens d'assemblage, par exemple du type boulon de serrage, distincts desdits premiers moyens d'assemblage et adaptés pour fixer la contrebride d'étanchéité avec le bout à emboîture 10, avec de préférence une possibilité de réglage du serrage axial de la contrebride d'étanchéité 4 avec le bout à emboîture 10.

L'ensemble de verrouillage prêt-à-monter 5 comporte également :
- au moins un accessoire de retenue 54, qui est adapté pour être inséré dans la contrebride de verrouillage 50 en étant positionné au moins en partie dans ladite chambre de retenue annulaire 51, et
- des moyens des serrage 55, qui permettent d'immobiliser ledit accessoire de retenue 54 sur le bout uni 20, par serrage de l'accessoire de retenue 54 sur le bout uni 20.

D'une manière générale, en référence à la figure 2, la contrebride de verrouillage 50 est adaptée pour bloquer axialement, au moins dans la direction axiale de déboîtement D du bout uni 20, ledit accessoire de retenue 54 positionné au moins en partie dans ladite chambre de retenue annulaire 51 et immobilisé par serrage sur le bout uni 20.

Dans la variante particulière illustrée, la contrebride de verrouillage 50 est faite d'une seule pièce. Dans d'autres variantes, elle peut être constituée par un assemblage monolithique rigide de plusieurs pièces.

Plus particulièrement dans la variante de la figure 2, la portion de la face interne de la contrebride de verrouillage 50, qui délimite ladite chambre de retenue annulaire 51 avec la face externe du bout uni 20, comporte une gorge de retenue annulaire 502 présentant, dans un plan longitudinal (plan de la figure 2), un profil courbe concave permettant le blocage axial susvisé de l'accessoire de retenue 54 dans la direction axiale de déboîtement D.

De préférence, tel qu'illustré sur la figure 2, ce profil courbe concave de la gorge annulaire 502 forme sensiblement un arc de cercle.

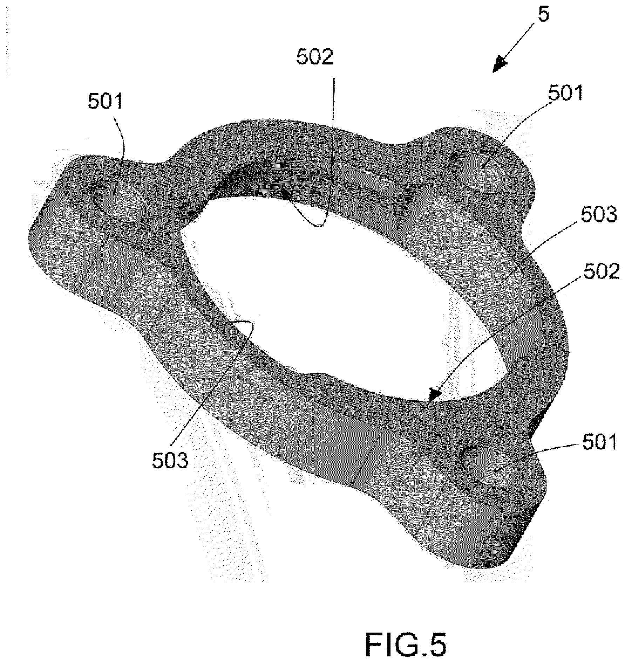

De préférence (figure 5) la face interne de la contrebride de verrouillage 50 comporte deux gorges de retenue annulaires 502 qui sont diamétralement opposées et de préférence symétriques l'une de l'autre par rapport à l'axe central de la contrebride de verrouillage 50.

De préférence (figure 5) la face interne de la contrebride de verrouillage 50 comporte également deux encoches 503 qui sont diamétralement opposées et de préférence symétriques l'une de l'autre par rapport à l'axe central de la contrebride de verrouillage 50. Ces deux encoches 503 sont prévues dans cette variante préférée de réalisation pour permettre le passage des bras de leviers 541b (décrits ci-après) de l'accessoire de retenue 54.

Dans le cadre plus général de l'invention, en fonction de la structure de l'accessoire de retenue 54, la face interne de la contrebride de verrouillage 50 peut également dans une autre variante comporter une seule gorge de retenue annulaire 502 qui s'étend par exemple sur 360°, c'est-à-dire sur toute la circonférence de la contrebride de verrouillage 50, ou comporter plus de deux gorges de retenue annulaires 502. La face interne de la contrebride de verrouillage 50 peut également dans une autre variante ne pas comporter d'encoche 503, ou comporter un nombre différent d'encoches 503, et notamment une seule encoche 503.

De préférence, la contrebride de verrouillage 50 et l'accessoire de retenue 54 sont adaptés l'un par rapport à l'autre de telle sorte que l'accessoire de retenue 54 est apte à être inséré coaxialement à l'intérieur de ladite contrebride de verrouillage 50, en butée axialement contre la face interne de la contrebride de verrouillage 50, de manière à former un ensemble contrebride de verrouillage 50/accessoire de retenue 54 qui est apte à être monté sur le bout uni 20 en étant enfilé sur le bout uni 20.

De préférence la contrebride de verrouillage 50 et l'accessoire de retenue 54 sont adaptés l'un par rapport à l'autre de telle sorte que l'accessoire de retenue 54 est apte à être inséré coaxialement à l'intérieur de ladite contrebride de verrouillage 50 par simple emboîtement axial dans la contrebride de verrouillage 50.

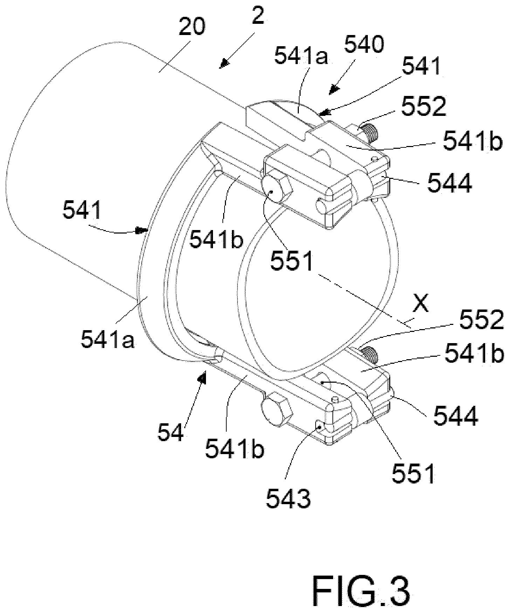

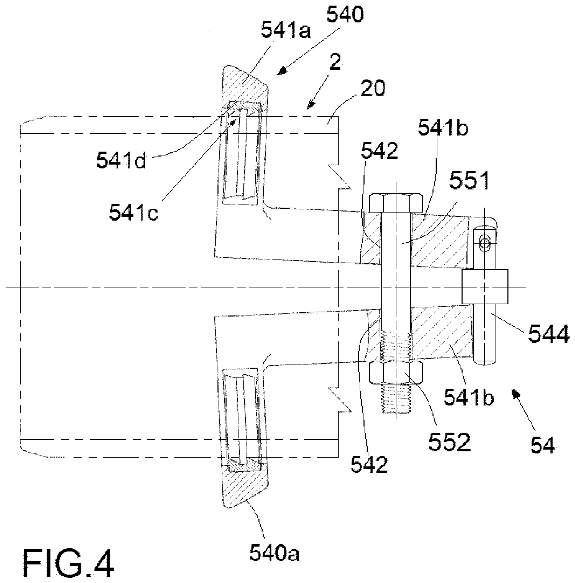

L'accessoire de retenue 54 comporte (figures 3 et 4) plus particulièrement un collier de retenue 540 apte à être resserré.

Ce collier de retenue 540 est apte à être inséré coaxialement dans la contrebride de verrouillage 50.

Une fois le collier de retenue 540 inséré coaxialement dans la contrebride de verrouillage 50, la portion circonférentielle du collier de retenue 540 qui est coaxiale avec une gorge annulaire 502 est insérée dans ladite gorge annulaire (figure 2).

Le collier de retenue 540 est apte à être resserré une fois qu'il a été inséré coaxialement dans la contrebride de verrouillage 50.

De préférence, le collier de retenue 540 de l'accessoire de retenue 54 est adapté pour être logé entièrement entre la face interne de la contrebride de verrouillage 50 et la face externe du le bout uni 20 (figure 2).

Dans la variante préférée de réalisation des figures annexées, l'accessoire de retenue 54 présente une structure similaire à celle décrite pour une autre application dans la demande de brevet européen EP 3 460 305.

Plus particulièrement, le collier de retenue 540 comporte deux demi-colliers 541 rigides et de préférence identiques, qui sont assemblés et dont l'écartement est réglable de manière à pouvoir resserrer le collier de retenue 540.

Plus particulièrement chaque demi-collier 541 comporte une mâchoire semi circulaire 541a et est prolongé, à chaque extrémité et dans la direction axiale, par un bras de levier 541b. Chaque bras de levier 541b comporte un trou d'assemblage traversant 542 (figure 4) pour le passage de la vis 551 d'un boulon de serrage. Les deux demi-colliers 541 sont assemblés au moyen des boulons de serrage 551, 552, les vis 551 des boulons de serrage étant passées à travers les bras de serrage 541b et le serrage des écrous 552 des boulons de serrage sur les vis 551 permettant de régler l'écartement des deux demi-colliers 541.

Sur sa face interne destinée à être orientée vers le bout uni 20, chaque mâchoire semi-circulaire 541a présente un profil denté 541c permettant une morsure de la mâchoire semi-circulaire 541a dans la paroi du bout uni 20, lors du serrage radial du collier au moyen des boulons de serrage 551, 552. Ce profil denté 541c peut être obtenu en fixant une denture semi-circulaire 541d rapportée à l'intérieur de chaque mâchoire semi circulaire 541a. Cette denture semi-circulaire 541d peut être en métal, et de préférence en acier inoxydable.

Lorsque le collier de retenue 540 est enfilée sur le bout uni 20, le serrage des boulons 551,552 permet de rapprocher les deux demi-colliers 541, de sorte que les deux mâchoires semi circulaires 541a sont resserrées radialement et mordent dans la paroi du bout uni 20, de manière suffisante pour immobiliser de manière fiable le collier de retenue 540 par rapport au bout uni 20.

De préférence, la face externe 540a (Figures 2 et 4) du collier de serrage 540 présente un profil adapté au profil courbe concave de la gorge annulaire 502 ménagée dans la face interne de la contrebride de verrouillage 50, en sorte de contribuer à la flexibilité de la jonction tubulaire en autorisant une déviation angulaire entre l'axe central du collier de retenue 540 et l'axe central de la contrebride de verrouillage 50, par exemple une déviation angulaire pouvant atteindre 5°.

De préférence, mais non nécessairement, chaque bras de levier 541b comporte également, à son extrémité libre, une fente rectangulaire 543 (figure 3), orientée parallèlement à l'axe du trou d'assemblage traversant 542, et le collier de retenue comporte deux goupilles 544, chaque goupille 544 étant adaptée pour être montée dans les fentes 543 en vis-à-vis de deux bras de levier 541b.

Le diamètre externe de chaque goupille 544, dans la partie centrale de la goupille 544 destinée à être positionnée entre deux bras de levier 541b, est supérieur au diamètre des deux extrémités de la goupille 544, qui sont destinées à être insérées dans les fentes 543 des bras de levier 541b.

Lors du serrage du collier sur le bout uni 20, chaque goupille 544 permet de maintenir l'alignement des deux demi-colliers 541 par rapport à l'axe central du bout uni 20 et permet également, grâce à sa partie centrale de plus grand diamètre, d'agir comme point d'appui de levier permettant avantageusement une transmission du couple de serrage des boulons de serrage 551.

Dans une autre variante de réalisation, le collier de retenue 540 peut ne pas comporter les fentes 543 et goupilles 544.

### Réalisation de la jonction tubulaire flexible verrouillée de la figure 2

Pour réaliser la jonction tubulaire flexible verrouillée de la figure 2, on met en oeuvre les étapes successives suivantes.

On monte le collier de retenue 540 de l'accessoire de retenue 54 coaxialement à l'intérieur de la contrebride de verrouillage 50, de telle sorte que les deux mâchoires 541a soient positionnées dans les gorge annulaires 502 de la contrebride de verrouillage 50, les boulons de serrage 551,552 étant desserrés.

Dans cette variante, ce montage peut être réalisé rapidement et facilement en alignant sensiblement l'axe central du collier de retenue 540 avec l'axe central de la contrebride de verrouillage 50 et en alignant axialement les bras de leviers 541b de l'accessoire de retenue 54 avec les encoches 503, puis en emboîtant axialement l'accessoire de retenue 54 dans la contrebride de verrouillage 50 de sorte que le collier de retenue 54 soit positionné dans les gorges annulaires 502, les bras de de leviers 541b étant passés à travers les encoches 503.

Ensuite, on monte l'ensemble contrebride de verrouillage 50/ accessoire de retenue 54 sur le bout uni 20 en l'enfilant et en le faisant coulisser axialement sur le bout uni 20.

On monte la contrebride d'étanchéité 4 sur le bout uni 20 en l'enfilant et en la faisant coulisser axialement sur le bout uni 20, et en l'orientant par rapport à la contrebride de verrouillage 50, de telle sorte que chaque ouverture d'assemblage 41 de la contrebride d'étanchéité 4 soit alignée axialement avec une ouverture d'assemblage 501 de la contrebride de verrouillage 50.

On insère le bout uni 20 coaxialement dans l'emboîture du bout à emboîture 10, la garniture de joint 3 ayant été préalablement correctement positionnée dans l'emboiture 100 du bout à emboîture 10. La profondeur d'insertion bout uni 20 est repérée et contrôlée de manière usuelle au moyen d'une marque d'insertion pratiquée sur la face externe du bout uni 20.

Dans le cadre de l'invention, le bout uni 20 peut avantageusement ne pas être chanfreiné.

On rapproche la contrebride d'étanchéité 4 et la contrebride de verrouillage 50 avec l'accessoire de retenue 54 en direction de l'emboîture 100 du bout à emboîture 10, de telle sorte que la contrebride d'étanchéité 4 soit en contact avec la bague de joint 30 de la garniture de joint 3.

On passe les tiges filetées 520 des vis 52 des boulons de serrage à travers les ouvertures d'assemblage 41, 501 des deux contrebrides 4 et 50, la tête 521 des vis 52 étant en butée contre la bride de serrage 101 du bout à emboîture 10, puis on positionne et on serre les écrous 53 des boulons sur les vis 52, en utilisant par exemple une clef dynamométrique, de manière à appliquer un couple de serrage approprié et contrôlé. Ce serrage axial permet d'assembler l'ensemble contrebride d'étanchéité 4/contrebride de verrouillage 50/accessoire de retenue 54 avec le bout à emboîture 10 en serrant la contrebride d'étanchéité 4 contre la bague de joint 30 de la garniture de joint 3, de sorte que la bague de joint 30 est comprimée par la contrebride d'étanchéité 4 pour une étanchéité améliorée.

Une fois que tous les boulons 52, 53 ont été serrés, on serre les boulons de serrage 551,552, de manière à serrer radialement le collier de retenue 540 sur le bout uni, avec un couple de serrage suffisant pour que le collier de retenue 540 morde de manière appropriée et suffisante dans la paroi du bout uni 20, afin d'immobiliser de manière fiable le collier de retenue 540 sur le bout uni 20.

En référence à la figure 2, une fois l'accessoire de retenue 54 inséré dans la contrebride de verrouillage 50 et immobilisé par serrage sur le bout uni 20 et une fois la contrebride de verrouillage 50 assemblée avec la contrebride d'étanchéité 4 et avec le bout à emboîture 10, le collier de retenue 540 de l'accessoire de retenue 54 est bloqué axialement dans la direction axiale de déboîtement D du bout uni et est de préférence bloqué radialement entre la contrebride de verrouillage 50 et le bout uni 20.

La contrebride de verrouillage 50 n'est pas en contact avec le bout uni 20, et il subsiste entre la contrebride de verrouillage 50 et le bout uni 20 un jeu de fonctionnement minium (E) sur toute la périphérie du bout uni 20 autorisant une déviation angulaire entre l'axe central du bout uni (20) et l'axe central de la contrebride de verrouillage (50), et de préférence déviation angulaire pouvant atteindre 5°.

A l'issue de cette succession d'étapes, on obtient la jonction tubulaire flexible et verrouillée de la figure 2 dans laquelle :
- une déviation angulaire du bout uni 20 par rapport au bout à emboîture 10 est autorisée, par exemple et de manière non limitative une déviation maximale de l'ordre de 5° ;
- une compression de la bague de joint 30 par la contrebride d'étanchéité 4 est obtenue pour une étanchéité améliorée entre le bout à emboîture 10 et le bout uni 20 sur toute la circonférence du bout uni 20.
- un verrouillage axial du bout uni 20 dans le bout à emboîture est obtenu au moyen de l'accessoire de retenue 54 (collier de retenue 540), qui est immobilisé sur le bout uni 20 et qui est bloqué axialement dans la direction de déboîtement D par la contrebride de verrouillage 50, ce qui permet à la jonction tubulaire flexible et verrouillée de résister à une pression importante d'un fluide, et notamment de l'eau, circulant à travers la jonction (par exemple et de manière non limitative une pression pouvant atteindre 25 Bars).

De manière avantageuse, le verrouillage axial par la contrebride de verrouillage 50 et la compression de la garniture de joint 3 par la contrebride d'étanchéité 4 sont indépendants, ce qui facilite et permet un réglage optimal de la compression de la garniture de joint 3 pour une étanchéité optimale et un réglage optimal du verrouillage axial du bout uni 20 par rapport au bout à emboîture 10, sans préjudice pour la compression de la garniture de joint 3.

Au surplus, la mise en oeuvre de la contrebride de verrouillage 50 ne compromet pas la flexibilité de la jonction tubulaire.

De préférence, la contrebride d'étanchéité 4, la contrebride de verrouillage 50, et l'accessoire de retenue 54 (à l'exception éventuellement des dentures semi-circulaire 541d) sont réalisés en fonte ductile.

De manière avantageuse, l'ensemble de verrouillage 5 prêt-à-monter de l'invention peut en outre avantageusement être utilisé pour améliorer le verrouillage axial d'une jonction tubulaire flexible existante mettant en oeuvre une contrebride d'étanchéité associée à des boulons de serrage plus courts. Dans ce cas ces boulons de serrage plus courts sont remplacés par les boulons de serrage 52, 53 de l'ensemble de verrouillage 5 qui sont plus longs pour tenir compte de l'ajout de la contrebride de verrouillage 50.

Ainsi, l'ensemble de verrouillage 5 prêt-à-monter peut avantageusement être commercialisé avec la contrebride d'étanchéité 4 ou séparément sans la contrebride d'étanchéité 4.

## Revendications

1. Ensemble d'étanchéité et de verrouillage (4 ; 5) pour jonction tubulaire flexible du type comportant un bout uni (20), un bout à emboîture (10), et au moins une garniture de joint (3), ledit ensemble d'étanchéité et de verrouillage (4 ; 5) comportant un ensemble de verrouillage prêt-à-monter (5) et une contrebride d'étanchéité (4), dans lequel ledit ensemble de verrouillage prêt-à-monter (5) comporte :
- une contrebride de verrouillage (50) cylindrique, qui est adaptée pour être montée sur le bout uni (20) en étant enfilée sur le bout uni (20) et délimiter une chambre de retenue annulaire (51) avec la face externe du bout uni (20),
- des moyens d'assemblage (52 ; 53) de la contrebride de verrouillage (50) avec la contrebride d'étanchéité (4) et avec le bout à emboîture (10),
- au moins un accessoire de retenue (54), qui est adapté pour être positionné au moins en partie dans ladite chambre de retenue annulaire (51), et
- des moyens des serrage (55), qui permettent d'immobiliser ledit accessoire de retenue sur le bout uni, par serrage de l'accessoire de retenue (54) sur le bout uni (20),
dans lequel la contrebride de verrouillage (50) est adaptée pour bloquer axialement, au moins dans la direction axiale de déboîtement (D) du bout uni, ledit accessoire de retenue (54) positionné au moins en partie dans ladite chambre de retenue annulaire (51) et immobilisé sur le bout uni (20), et dans lequel la contrebride d'étanchéité (4) est adaptée pour être montée sur le bout uni (20) et pour être assemblée avec le bout à emboîture (10) et avec la contrebride de verrouillage (50) de l'ensemble de verrouillage prêt-à-monter (5), de manière à comprimer, au moyen de la contrebride d'étanchéité, la garniture de joint (3) montée entre l'emboîture (100) du bout à emboîture (10) et le bout uni (20) inséré coaxialement dans ladite l'emboîture (100) du bout à emboîture (10).

2. Ensemble d'étanchéité et de verrouillage (4 ; 5) selon la revendication 1, dans lequel lesdits moyens d'assemblage (52 ; 53) de l'ensemble de verrouillage prêt-à-monter sont adaptés pour serrer axialement, de préférence avec une force de serrage réglable, la contrebride de verrouillage (50) avec la contrebride d'étanchéité (4) et avec le bout à emboîture (10).

3. Ensemble d'étanchéité et de verrouillage (4 ; 5) selon l'une quelconque des revendications précédentes, dans lequel la portion de la face interne de la contrebride de verrouillage (50), qui délimite ladite chambre de retenue annulaire (51) avec la face externe du bout uni (20), comporte une gorge de retenue annulaire (502), et de préférence dans lequel ladite gorge annulaire (502) présente un profil courbe concave permettant le blocage axial de l'accessoire de retenue (54) dans la direction axiale de déboîtement (D), et plus préférentiellement un profil en arc de cercle.

4. Ensemble d'étanchéité et de verrouillage (4 ; 5) selon la revendication 3, dans lequel la face externe (540a) de l'accessoire de retenue (54) destinée à être en contact avec cette gorge annulaire (502) présente un profil permettant une déviation angulaire entre l'accessoire de retenue (54) et la contrebride de verrouillage (50) et de préférence une déviation angulaire pouvant atteindre au moins 5°.

5. Ensemble d'étanchéité et de verrouillage (4 ; 5) selon l'une quelconque des revendications précédentes, dans lequel l'accessoire de retenue (54) comporte un collier de retenue (540) apte à être inséré coaxialement dans la contrebride de verrouillage (50) et est apte à être resserré une fois qu'il a été inséré coaxialement dans la contrebride de verrouillage (50), et plus préférentiellement dans lequel le collier de retenue (540) de l'accessoire de retenue (54) est adapté pour être logé entièrement entre la face interne de la contrebride de verrouillage (50) et la face externe du bout uni (20).

6. Ensemble d'étanchéité et de verrouillage (4 ; 5) selon la revendication 5, dans lequel le collier de retenue (540) comporte deux demi-colliers (541) assemblés dont l'écartement est réglable.

7. Ensemble d'étanchéité et de verrouillage (4 ; 5) selon l'une quelconque des revendications précédentes, dans lequel l'accessoire de retenue (54) comporte sur sa face interne destinée à être orientée vers le bout uni (20), un profil denté (541c) permettant une morsure de l'accessoire de retenue (54) dans la paroi du bout uni (20), lors du serrage de l'accessoire de retenue (54).

8. Ensemble d'étanchéité et de verrouillage (4 ; 5) selon l'une quelconque des revendications précédentes, dans lequel la contrebride de verrouillage (50) et l'accessoire de retenue (54) sont adaptés l'un par rapport à l'autre de telle sorte que l'accessoire de retenue (54) est apte à être inséré coaxialement à l'intérieur de ladite contrebride de verrouillage (50), en butée axialement contre la face interne de la contrebride de verrouillage (50), de manière à former un ensemble contrebride de verrouillage (50)/accessoire de retenue (54) qui est apte à être monté sur le bout uni (20) en étant enfilé sur le bout uni (20), et de préférence dans lequel la contrebride de verrouillage (50) et l'accessoire de retenue (54) sont adaptés l'un par rapport à l'autre de telle sorte l'accessoire de retenue (54) est apte à être inséré coaxialement à l'intérieur de la contrebride de verrouillage (50) par simple emboîtement axial dans la contrebride de verrouillage (50).

9. Ensemble d'étanchéité et de verrouillage (4 ; 5) selon l'une quelconque des revendications précédentes, dans lequel la contrebride de verrouillage (50) est constituée d'une seule pièce ou d'un assemblage monolithique rigide de plusieurs pièces.

10. Ensemble d'étanchéité et de verrouillage (4 ; 5) selon l'une quelconque des revendications précédentes, dans lequel la contrebride d'étanchéité (4) comporte une ou plusieurs ouvertures d'assemblage (41) axiales et traversantes, reparties sur la circonférence de la contrebride de verrouillage (5), dans lequel la contrebride de verrouillage (50) comporte une ou plusieurs ouvertures d'assemblage (501) axiales et traversantes, reparties sur la circonférence de la contrebride de verrouillage (5), et dans lequel la contrebride de verrouillage (50) et la contrebride d'étanchéité (4) sont adaptées pour être positionnées l'une contre l'autre en étant alignées axialement de telle sorte que chaque ouverture d'assemblage (501) de la contrebride de verrouillage (50) est alignée axialement avec une ouverture d'assemblage (41) de la contrebride d'étanchéité (4).

11. Ensemble pour la réalisation d'une jonction tubulaire flexible et verrouillée, ledit ensemble comportant un premier élément de canalisation (1) comportant un bout à emboîture (10) à au moins une extrémité, un deuxième élément de canalisation (2) comportant un bout uni (20) à au moins une extrémité, au moins une garniture de joint (3) adaptée pour être montée entre l'emboîture (100) du bout à emboîture (10) et le bout uni (20) inséré coaxialement dans ladite emboîture (100) du bout à emboîture (10), et ledit ensemble comportant un ensemble d'étanchéité et de verrouillage (4 ; 5) selon l'une quelconque des revendications précédentes.

12. Ensemble selon la revendication 11, dans lequel la contrebride de verrouillage (50) et l'accessoire de retenue (54) sont adaptés de manière à permettre une déviation angulaire entre l'axe central du bout uni (20) et l'axe central de la contrebride de verrouillage (50), lorsque l'accessoire de retenue (54) est inséré dans la contrebride de verrouillage (50) et est immobilisé par serrage sur le bout uni (20) et lorsque la contrebride de verrouillage (50) est assemblée avec la contrebride d'étanchéité (4) et avec le bout à emboîture (10), et de préférence une déviation angulaire pouvant atteindre 5°.

13. Ensemble selon la revendication 11 ou 12, dans lequel la contrebride de verrouillage (50) et l'accessoire de retenue (54) sont adaptés l'un par rapport à l'autre, de telle sorte qu'une fois l'accessoire de retenue (54) inséré dans la contrebride de verrouillage (50) et immobilisé par serrage sur le bout uni (20) et une fois la contrebride de verrouillage (50) assemblée avec la contrebride d'étanchéité (4) et avec le bout à emboîture (10), l'accessoire de retenue (54) est bloqué axialement dans la direction axiale de déboîtement (D) du bout uni et est de préférence bloqué radialement entre la contrebride de verrouillage (50) et le bout uni (20), et la contrebride de verrouillage (50) n'est pas en contact avec le bout uni (20), et de préférence dans lequel la contrebride de verrouillage (50) est conçue de telle sorte qu'une fois l'accessoire de retenue (54) inséré dans la contrebride de verrouillage (50) et immobilisé par serrage sur le bout uni (20) et une fois la contrebride de verrouillage (50) assemblée avec la contrebride d'étanchéité (4) et avec le bout à emboîture (10), il subsiste entre la contrebride de verrouillage (50) et le bout uni (20) un jeu de fonctionnement minium (E) sur toute la périphérie du bout uni (20) autorisant une déviation angulaire entre l'axe central du bout uni (20) et l'axe central de la contrebride de verrouillage (50), et de préférence une déviation angulaire pouvant atteindre 5°.

14. Ensemble selon l'une quelconque des revendications 11 à 13, dans lequel le premier élément de canalisation (1) est un raccord de canalisation ou un tuyau, de préférence en fonte ductile, et le deuxième élément de canalisation (2) est un raccord de canalisation ou un tuyau, de préférence en fonte ductile.

15. Utilisation de l'ensemble de l'une quelconque des revendications 11 à 14 pour la réalisation d'une jonction tubulaire flexible et verrouillée.

16. Procédé de réalisation d'une jonction tubulaire flexible et verrouillée au moyen de l'ensemble de l'une quelconque des revendications 11 à 14, et comportant les étapes successives suivantes :
- on insère l'accessoire de retenue (54) à l'intérieur de la contrebride de verrouillage (50) ;
- on monte l'ensemble contrebride de verrouillage (50)/accessoire de retenue (54) sur le bout uni (20) en le faisant coulisser axialement sur le bout uni (20) ;
- on monte la contrebride d'étanchéité (4) sur le bout uni (20) en la faisant coulisser axialement sur le bout uni (20) ;
- on insère le bout uni (20) coaxialement dans l'emboîture (100) du bout à emboîture (10), la garniture de joint (3) ayant été préalablement positionnée dans l'emboîture (100) du bout à emboîture (10) ;
- on assemble la contrebride de verrouillage (50) avec la contrebride d'étanchéité (4) et avec le bout à emboîture (10), de préférence avec un serrage axial de la contrebride de verrouillage (50) avec la contrebride d'étanchéité (4) et avec le bout à emboîture (10), de manière à comprimer la garniture de joint (3) au moyen de la contrebride d'étanchéité (4), de préférence sur toute la circonférence du bout uni (20) ;
- on serre l'accessoire de retenue (54) sur le bout uni (20), avec une force de serrage suffisante pour immobiliser l'accessoire de retenue (54) sur le bout uni (20).

## Patentansprüche

1. Dichtungs- und Verriegelungsanordnung (4; 5) für eine flexible Rohrverbindung des Typs, der ein einfaches Ende (20), ein Muffenende (10) und mindestens eine Dichtungsanordnung (3) aufweist, wobei die Dichtungs- und Verriegelungsanordnung (4; 5) eine montagefertige Verriegelungsanordnung (5) und einen Dichtungsflansch (4) umfasst, wobei die montagefertige Verriegelungsanordnung (5) Folgendes umfasst:
- einen zylindrischen Verriegelungsgegenflansch (50), der so beschaffen ist, dass er an dem einfachen Ende (20) angebracht werden kann, indem er über das einfache Ende (20) geschoben wird und mit der Außenseite des einfachen Endes (20) eine ringförmige Haltekammer (51) begrenzt,
- Mittel (52; 53) zum Verbinden des Verriegelungsgegenflanschs (50) mit dem Dichtflansch (4) und mit dem Muffenende (10),
- mindestens eine Haltevorrichtung (54), die so beschaffen ist, dass sie zumindest teilweise in der ringförmigen Haltekammer (51) angeordnet werden kann, und
- Klemmmittel (55), die es ermöglichen, die Haltevorrichtung an dem einfachen Ende zu fixieren, indem die Haltevorrichtung (54) an dem einfachen Ende (20) festgeklemmt wird,
wobei der Verriegelungsgegenflansch (50) dazu ausgelegt ist, die Haltevorrichtung (54), die zumindest teilweise in der ringförmigen Haltekammer (51) positioniert und an dem einfachen Ende (20) fixiert ist, zumindest in der axialen Ausrückrichtung (D) des einfachen Endes axial zu blockieren, und wobei der Dichtungsgegenflansch (4) dazu ausgelegt ist, dass er an dem einfachen Ende (20) montiert werden kann und mit dem Muffenende (10) und dem Verriegelungsgegenflansch (50) der fertig montierten Verriegelungsbaugruppe (5) zusammengebaut werden kann, so dass die Dichtung (3), die zwischen der Muffe (100) des Muffenendes (10) und dem koaxial in die Muffe (100) des Muffenendes (10) eingesetzten einfachen Ende (20) montiert ist, mittels des Dichtungsgegenflanschs komprimiert wird.

2. Dichtungs- und Verriegelungsanordnung (4; 5) nach Anspruch 1, wobei die Montagemittel (52; 53) der montagefertigen Verriegelungsanordnung dazu geeignet sind, den Verriegelungsgegenflansch (50) mit dem Dichtungsgegenflansch (4) und mit dem Muffenende (10) axial zu verspannen, vorzugsweise mit einer einstellbaren Spannkraft.

3. Dicht- und Verriegelungsanordnung (4; 5) nach einem der vorhergehenden Ansprüche, wobei der Bereich der Innenfläche des Verriegelungsgegenflansches (50), der die ringförmige Haltekammer (51) mit der Außenfläche des einfachen Endes (20) begrenzt, eine ringförmige Haltenut (502) aufweist, und wobei vorzugsweise die ringförmige Nut (502) ein konkav gekrümmtes Profil aufweist, das das axiale Blockieren der Haltevorrichtung (54) in der axialen Ausrückrichtung (D) ermöglicht, und noch bevorzugter ein kreisbogenförmiges Profil aufweist.

4. Dichtungs- und Verriegelungsanordnung (4; 5) nach Anspruch 3, bei der die Außenfläche (540a) der Haltevorrichtung (54), die dazu ausgelegt ist, mit dieser ringförmigen Nut (502) in Kontakt zu treten, ein Profil aufweist, das eine Winkelabweichung zwischen der Haltevorrichtung (54) und dem Verriegelungsgegenflansch (50) ermöglicht, und zwar vorzugsweise eine Winkelabweichung, die mindestens 5° betragen kann.

5. Dichtungs- und Verriegelungsanordnung (4; 5) nach einem der vorhergehenden Ansprüche, wobei die Haltevorrichtung (54) einen Haltekragen (540) aufweist, der koaxial in den Verriegelungsgegenflansch (50) einführbar ist und nach dem koaxialen Einführen in den Verriegelungsgegenflansch (50) nachspannbar ist, und wobei noch bevorzugter der Haltekragen (540) der Haltevorrichtung (54) so beschaffen ist, dass er vollständig zwischen der Innenseite des Verriegelungsgegenflansches (50) und der Außenseite des einfachen Endes (20) untergebracht werden kann.

6. Dichtungs- und Verriegelungsanordnung (4; 5) nach Anspruch 5, wobei der Haltekragen (540) zwei zusammengesetzte Halbkragen (541) umfasst, deren Abstand einstellbar ist.

7. Dichtungs- und Verriegelungsanordnung (4; 5) nach einem der vorhergehenden Ansprüche, wobei die Haltevorrichtung (54) auf seiner Innenseite, die dazu bestimmt ist, dem einfachen Ende (20) zugewandt zu sein, ein gezahntes Profil (541c) aufweist, das einen Biss der Haltevorrichtung (54) in die Wand des einfachen Endes (20) ermöglicht, wenn die Haltevorrichtung (54) festgezogen wird.

8. Dichtungs- und Verriegelungsanordnung (4; 5) nach einem der vorhergehenden Ansprüche, wobei der Verriegelungsgegenflansch (50) und die Haltevorrichtung (54) so aneinander angepasst sind, dass die Haltevorrichtung (54) geeignet ist, koaxial in das Innere des Verriegelungsgegenflansches (50) eingeführt zu werden, wobei sie axial an der Innenseite des Verriegelungsgegenflansches (50) anliegt, so dass eine Anordnung aus Verriegelungsgegenflansch (50)/Haltevorrichtung (54) gebildet wird, die geeignet ist, an dem einfachen Ende (20) angebracht zu werden, indem sie über das einfachen Ende (20) geschoben wird, und wobei vorzugsweise der Verriegelungsgegenflansch (50) und die Haltevorrichtung (54) so aneinander angepasst sind, dass das die Haltevorrichtung (54) koaxial in den Verriegelungsgegenflansch (50) durch einfaches axiales Einstecken in den Verriegelungsgegenflansch (50) einführbar ist.

9. Dichtungs- und Verriegelungsanordnung (4; 5) nach einem der vorhergehenden Ansprüche, wobei der Verriegelungsgegenflansch (50) aus einem einzigen Teil oder aus einer starren monolithischen Verbindung mehrerer Teile besteht.

10. Dichtungs- und Verriegelungsanordnung (4; 5) nach einem der vorhergehenden Ansprüche, wobei der Dichtungsgegenflansch (4) eine oder mehrere axiale und durchgehende Verbindungsöffnungen (41) aufweist, die über den Umfang des Verriegelungsgegenflanschs (5) verteilt sind, wobei der Verriegelungsgegenflansch (50) eine oder mehrere axiale und durchgehende Verbindungsöffnungen (501) aufweist, die über den Umfang des Verriegelungsgegenflanschs (5) verteilt sind, und wobei der Verriegelungsgegenflansch (50) und der Dichtungsgegenflansch (4) so angepasst sind, dass sie axial ausgerichtet gegeneinander positioniert werden können, so dass jede Verbindungsöffnung (501) des Verriegelungsgegenflansches (50) axial fluchtend zu einer Verbindungsöffnung (41) des Dichtungsgegenflansches (4) ausgerichtet ist.

11. Baugruppe zur Herstellung einer flexiblen, verriegelten Rohrverbindung, wobei die Baugruppe ein erstes Kanalisationselement (1) mit einem Muffenende (10) an mindestens einem Ende, ein zweites Kanalisationselement (2) mit einem einfachen Ende (20) an mindestens einem Ende, mindestens eine Dichtungsanordnung (3), die so beschaffen ist, dass sie zwischen der Muffe (100) des Muffenendes (10) und dem einfachen Ende (20), das koaxial in die Muffe (100) des Muffenendes (10) eingesetzt ist, angebracht werden kann, umfasst, und wobei die Anordnung eine Dichtungs- und Verriegelungsanordnung (4; 5) nach einem der vorhergehenden Ansprüche umfasst.

12. Baugruppe nach Anspruch 11, wobei der Verriegelungsgegenflansch (50) und die Haltevorrichtung (54) so ausgelegt sind, dass sie eine Winkelabweichung zwischen der Mittelachse des einfachen Endes (20) und der Mittelachse des Verriegelungsgegenflansches (50) ermöglichen, wenn die Haltevorrichtung (54) in den Verriegelungsgegenflansch (50) eingeführt und durch Festklemmen am einfachen Ende (20) fixiert wird und wenn der Verriegelungsgegenflansch (50) mit dem Dichtungsgegenflansch (4) und mit dem Muffenende (10) zusammengebaut ist, und zwar vorzugsweise eine Winkelabweichung von bis zu 5°.

13. Baugruppe nach Anspruch 11 oder 12, bei der der Verriegelungsgegenflansch (50) und die Haltevorrichtung (54) so aufeinander abgestimmt sind, dass, wenn die Haltevorrichtung (54) in den Verriegelungsgegenflansch (50) eingeführt und durch Anziehen an dem einfachen Ende (20) fixiert ist und wenn der Verriegelungsgegenflansch (50) mit dem Dichtungsgegenflansch (4) und dem Muffenende (10) zusammengebaut ist, die Haltevorrichtung (54) axial in der axialen Ausrückrichtung (D) des einfachen Endes blockiert ist und vorzugsweise radial zwischen dem Verriegelungsgegenflansch (50) und dem einfachen Ende (20) blockiert ist, und der Verriegelungsgegenflansch (50) nicht mit dem einfachen Ende (20) in Kontakt steht, und wobei vorzugsweise der Verriegelungsgegenflansch (50) so konstruiert ist, dass nach dem Einsetzen der Haltevorrichtung (54) in den Verriegelungsgegenflansch (50) und dem Festklemmen an dem einfachen Ende (20) und nach dem Zusammenbau des Verriegelungsgegenflansches (50) mit dem Dichtungsgegenflansch (4) und dem Muffenende (10), zwischen dem Verriegelungsgegenflansch (50) und dem einfachen Ende (20) ein minimales Spiel (E) über den gesamten Umfang des einfachen Endes (20) verbleibt, das eine Winkelabweichung zwischen der Mittelachse des einfachen Endes (20) und der Mittelachse des Verriegelungsgegenflansches (50) zulässt, und zwar vorzugsweise eine Winkelabweichung von bis zu 5°.

14. Baugruppe nach einem der Ansprüche 11 bis 13, wobei das erste Kanalisationselement (1) ein Kanalanschluss oder ein Rohr ist, vorzugsweise aus duktilem Gusseisen, ist und das zweite Kanalisationselement (2) ein Kanalfitting oder ein Rohr, vorzugsweise aus duktilem Gusseisen, ist.

15. Verwendung der Baugruppe nach einem der Ansprüche 11 bis 14 zur Herstellung einer flexiblen und verriegelten Rohrverbindung.

16. Verfahren zur Herstellung einer flexiblen und verriegelten Rohrverbindung mithilfe der Baugruppe nach einem der Ansprüche 11 bis 14 und mit den folgenden aufeinanderfolgenden Schritten:
- Einführen der Haltevorrichtung (54) in das Innere des Verriegelungsgegenflanschs (50);
- Montieren der Einheit aus Verriegelungsgegenflansch (50)/Haltevorrichtung (54) an dem einfachen Ende (20), indem sie axial auf das einfache Ende (20) geschoben wird;
- Montieren des Dichtungsgegenflanschs (4) auf dem einfachen Ende (20), indem er axial auf das einfache Ende (20) geschoben wird;
- Einsetzen des einfachen Endes (20) koaxial in die Muffe (100) des Muffenendes (10), wobei die Dichtung (3) zuvor in der Aufnahme (100) des Muffenendes (10) positioniert wurde;
- Zusammenfügen des Verriegelungsgegenflanschs (50) mit dem Dichtungsgegenflansch (4) und mit dem Muffenende (10), vorzugsweise durch axiales Verspannen des Verriegelungsgegenflanschs (50) mit dem Dichtungsgegenflansch (4) und mit dem Muffenende (10), so dass die Dichtung (3) mittels des Dichtungsgegenflansches (4) zusammengepresst wird, vorzugsweise über den gesamten Umfang des einfachen Endes (20);
- Verspannen der Haltevorrichtung (54) an dem einfachen Ende (20) mit einer Klemmkraft, die ausreicht, um die Haltevorrichtung (54) an dem einfachen Ende (20) zu fixieren.

## Claims

1. Sealing and locking assembly (4; 5) for a flexible tubular joint of the type comprising a spigot end (20), a socket end (10), and at least one gasket (3), said sealing and locking assembly (4; 5) comprising a ready-to-mount locking assembly (5) and a sealing mating flange (4), wherein said ready-to-mount locking assembly (5) comprises:
- a cylindrical locking mating flange (50), which is suitable for mounting on the spigot end (20) by being threaded onto the spigot end (20) and for delimiting an annular retaining chamber (51) with the outer face of the spigot end (20),
- means (52; 53) for assembling the locking mating flange (50) with the sealing mating flange (4) and with the socket end (10),
- at least one retaining accessory (54), which is suitable for being positioned at least partially in said annular retaining chamber (51), and
- clamping means (55), which make it possible to secure said retaining accessory to the spigot end by clamping the retaining accessory (54) onto the spigot end (20),
wherein the locking mating flange (50) is suitable for axially locking, at least in the axial direction of disengagement (D) of the spigot end, said retaining accessory (54) which is positioned at least partially in said annular retaining chamber (51) and secured to the spigot end (20), and wherein the sealing mating flange (4) is suitable for mounting on the spigot end (20) and for being joined to the socket end (10) and to the locking mating flange (50) of the ready-to-mount locking assembly (5), so as to compress, by means of the sealing mating flange, the gasket (3) which is mounted between the socket (100) of the socket end (10) and the spigot end (20) which is inserted coaxially into said socket (100) of the socket end (10).

2. Sealing and locking assembly (4; 5) according to claim 1, wherein said assembly means (52; 53) of the ready-to-mount locking assembly are suitable for axially clamping, preferably with an adjustable clamping force, the locking mating flange (50) to the sealing mating flange (4) and to the socket end (10).

3. Sealing and locking assembly (4; 5) according to any one of the preceding claims, wherein the portion of the inner face of the locking mating flange (50), which delimits said annular retaining chamber (51) with the outer face of the spigot end (20), comprises an annular retaining groove (502), and preferably wherein said annular groove (502) has a concave curved profile allowing axial locking of the retaining accessory (54) in the axial direction of disengagement (D), and more preferably has a circular arc profile.

4. Sealing and locking assembly (4; 5) according to claim 3, wherein the external face (540a) of the retaining accessory (54) which is intended to be in contact with this annular groove (502) has a profile allowing an angular deflection between the retaining accessory (54) and the locking mating flange (50) and preferably an angular deflection of up to at least 5°.

5. Sealing and locking assembly (4; 5) according to any one of the preceding claims, wherein the retaining accessory (54) comprises a retaining collar (540) capable of being inserted coaxially into the locking mating flange (50) and is capable of being tightened once it has been inserted coaxially into the locking mating flange (50), and more preferably wherein the retaining collar (540) of the retaining accessory (54) is suitable for being housed entirely between the inner face of the locking mating flange (50) and the outer face of the spigot end (20).

6. Sealing and locking assembly (4; 5) according to claim 5, wherein the retaining collar (540) comprises two half-collars (541) which are joined together, the spacing of which is adjustable.

7. Sealing and locking assembly (4; 5) according to any one of the preceding claims, wherein the retaining accessory (54) comprises, on its inner face which is intended to be oriented toward the spigot end (20), a toothed profile (541c) allowing the retaining accessory (54) to bite into the wall of the spigot end (20), when the retaining accessory (54) is tightened.

8. Sealing and locking assembly (4; 5) according to any one of the preceding claims, wherein the locking mating flange (50) and the retaining accessory (54) match one another such that the retaining accessory (54) is capable of being inserted coaxially inside said locking mating flange (50), axially abutting the inner face of the locking mating flange (50), so as to form a locking mating flange (50)/retaining accessory (54) assembly which is capable of being mounted on the spigot end (20) by being threaded onto the spigot end (20), and preferably wherein the locking mating flange (50) and the retaining accessory (54) match one another such that the retaining accessory (54) is capable of being inserted coaxially inside the locking mating flange (50) by simple axial socketing in the locking mating flange (50).

9. Sealing and locking assembly (4; 5) according to any one of the preceding claims, wherein the locking mating flange (50) is made of a single part or of a rigid monolithic assembly of several parts.

10. Sealing and locking assembly (4; 5) according to any one of the preceding claims, wherein the sealing mating flange (4) has one or more axial assembly through-openings (41) distributed around the circumference of the locking mating flange (5), wherein the locking mating flange (50) comprises one or more axial assembly through-openings (501) distributed around the circumference of the locking mating flange (5), and wherein the locking mating flange (50) and the sealing mating flange (4) are suitable for being positioned against each other in axial alignment such that each assembly opening (501) of the locking mating flange (50) is axially aligned with an assembly opening (41) of the sealing mating flange (4).

11. Assembly for producing a flexible and locked tubular joint, said assembly comprising a first pipe element (1) comprising a socket end (10) at at least one end, a second pipe element (2) comprising a spigot end (20) at at least one end, at least one gasket (3) which is suitable for being mounted between the socket (100) of the socket end (10) and the spigot end (20) which is inserted coaxially into said socket (100) of the socket end (10), and said assembly comprising a sealing and locking assembly (4; 5) according to any one of the preceding claims.

12. Assembly according to claim 11, wherein the locking mating flange (50) and the retaining accessory (54) are suitable for allowing angular deflection between the central axis of the spigot end (20) and the central axis of the locking mating flange (50), when the retaining accessory (54) is inserted into the locking mating flange (50) and is clamped to the spigot end (20) and when the locking mating flange (50) is joined to the sealing mating flange (4) and to the socket end (10), and preferably an angular deflection of up to 5°.

13. Assembly according to claim 11 or 12, wherein the locking mating flange (50) and the retaining accessory (54) match one another in such a way that, once the retaining accessory (54) is inserted into the locking mating flange (50) and clamped to the spigot end (20), and once the locking mating flange (50) is joined to the sealing mating flange (4) and to the socket end (10), the retaining accessory (54) is locked axially in the axial direction of disengagement (D) of the spigot end and is preferably locked radially between the locking mating flange (50) and the spigot end (20), and the locking mating flange (50) is not in contact with the spigot end (20), and preferably wherein the locking mating flange (50) is designed such that once the retaining accessory (54) has been inserted into the locking mating flange (50) and clamped to the spigot end (20), and once the locking mating flange (50) is joined to the sealing mating flange (4) and to the socket end (10), a minimum operating clearance (E) remains between the locking mating flange (50) and the spigot end (20) over the entire periphery of the spigot end (20), allowing an angular deflection between the central axis of the spigot end (20) and the central axis of the locking mating flange (50), and preferably an angular deflection of up to 5°.

14. Assembly according to any one of claims 11 to 13, wherein the first pipe element (1) is a pipe fitting or a pipe, preferably made of ductile cast iron, and the second pipe element (2) is a pipe fitting or a pipe, preferably made of ductile cast iron.

15. Use of the assembly of any one of claims 11 to 14 to produce a flexible and locked tubular joint.

16. Method for producing a flexible and locked tubular joint by means of the assembly of any one of claims 11 to 14, comprising the following successive steps:
- inserting the retaining accessory (54) into the locking mating flange (50);
- mounting the locking mating flange (50)/retaining accessory (54) assembly on the spigot end (20) by sliding it axially onto the spigot end (20);
- mounting the sealing mating flange (4) on the spigot end (20) by sliding it axially onto the spigot end (20);
- inserting the spigot end (20) coaxially into the socket (100) of the socket end (10), the gasket (3) having been previously positioned in the socket (100) of the socket end (10);
- joining the locking mating flange (50) to the sealing mating flange (4) and to the socket end (10), preferably by axial clamping of the locking mating flange (50) to the sealing mating flange (4) and to the socket end (10), so as to compress the gasket (3) by means of the sealing mating flange (4), preferably over the entire circumference of the spigot end (20);
- tightening the retaining accessory (54) onto the spigot end (20) with a clamping force sufficient to secure the retaining accessory (54) to the spigot end (20).
